# EUROPEAN PATENT APPLICATION

(11) **EP 1 457 356 A1**
(43) Date of publication of application: **15.09.2004**
(21) Application number: 03251585.0
(22) Date of filing: 14.03.2003
(51) Int. Cl.: B43L 9/08, B43L 13/18, G01B 3/16

(54) **Imaging aid**

(71) Applicant: Goldie, Ronald, Kilsyth, VIC 3137 (AU)
(72) Inventor: Goldie, Ronald, Kilsyth, VIC 3137 (AU)
(74) Representative: Ablett, Graham Keith

(57) **Abstract**

A proportioning device having two elongated members (12,14) which are uncouplably joined at a pivotable joint (20) which may be at various predetermined positions (18). Both ends of both of the elongated members terminate at pointers (26,28,30,32), and the pointers at at least one pair of corresponding ends are adjustable. By variation of the pivot point (20) and the position of the adjustable pointer (26,28,30,32), it is possible to obtain a wide range of ratios of lengths between the pivotable joint (20) and the pointers (26,28,30,32) at the two ends of the elongated members (12,14). The device can be used to transfer a series of proportioned dimensions from an original object to an image or reproduction.

## Description

The invention relates to the reproduction of images. More particularly it relates to the production of scaled images on a two-dimensional surface from a two-dimensional or three-dimensional original.

In this specification, where a document, act or item of knowledge is referred to or discussed, this reference or discussion is not an admission that the document, act or item of knowledge or any combination thereof was at the priority date:
(i) part of common general knowledge; or
(ii) known to be relevant to an attempt to solve any problem with which this specification is concerned.

Artists, craftsmen and some hobbyists often wish to transfer the dimensions or proportions from an original object to a surface on which it is desired to produce an image. Often this will be done so that the reproduced image is of a different size from the original image.

Traditionally, artists often check the dimensions by holding an elongated object (such as a paint brush or pencil) at arms length and positioning their thumb or finger on the object so as to compare an apparent dimension of the original and the image. This method is only approximate and is usually only suitable when the image is the same size or smaller than the original. Similarly draftsmen sometimes wish to copy at least part of an existing scaled drawing, photograph or other image to a new drawing at a different scale.

Therefore, a device which could be used to transfer multiple measurements at a constant size ratio would be of benefit.

US Patent 3,634,942 and GB 2,301,799 both propose devices having two, pivotally connected straight arms of equal length, having reference marks at the distal end of each arm and corresponding marks at various positions along the edges of the arms wherein the various positions represent certain scale ratios. In use the arms are adjusted so that the separation of the reference marks at the ends of the arms corresponds to the separation of two points of interest on the original object. The required separation on the reproduced image is then represented by the separation of the two marks at the position along the edges of the arms corresponding to the desired scale ratio. Scale ratios of greater than one can be generated by reversing the process. These devices have a number of limitations: they are not well adapted to use when a scaling factor which is not marked on the device is required, such as when the original object is part of a photograph and the reproduced image is to be fitted onto a sheet of paper; the technique of using marks on an edge is imprecise, especially at large scale factors (this is the reason why in navigation and similar precision mensuration processes, lengths are not determined directly with a ruler, but through the agency of dividers); the legs obscure surrounding markings on the original object and the reproduced image with a resulting increased probability of making errors.

GB 2,085,810 proposes a proportioning device comprising three legged callipers wherein the legs are linked so that two of the three remain parallel in use. Such a device can be used for marking a scaled fraction along a straight line but it is unsuited for more general use. Also, it is difficult to adjust the scaling factor of the device.

GB 2,232,381 proposes a scissor-action proportional divider wherein a pair of arms with pointers at each end can be pivoted at any one of a series of fixed pivot positions such that various fixed scaling ratios are obtained. This overcomes many of the precision problems associated with other prior art, but it is still restricted to fixed scaling factors.

It is an object of the present invention to provide a device which is useful in the creation on a surface of an image of a two-dimensional or three-dimensional original.

According to one form of the invention, there is provided a proportioning device having:
· two elongated members of substantially equal length which are adapted so that both ends of both elongated members have pointing elements, and the separation of the pointing element at one end of each of the elongated members from the pointing element at the other end of the same elongated member is capable of being adjusted; wherein
   the two elongated members are capable of being uncouplably joined together by means of a pivotable joint at various predetermined points along their lengths such that the pointing elements on the corresponding ends of the two elongated members are capable of being substantially the same radially measured distance from the pivotable joint;
whereby in use, separation of the pointing elements at one corresponding end of the elongated members by a first distances will result in the pointing elements at the other ends of the elongated members in being separated by a second distance which is at a substantially constant proportion of the first distance, and the said constant proportion is capable of being adjusted.

According to a preferred form of the invention, both of the elongated members have a series of corresponding holes along their lengths whereby the pivotable joint may be formed by inserting a pivot means through one pair of the corresponding holes. Preferably a means of retaining the pivot is included. In one convenient form of the invention, the pivot is in the form of a threaded bolt and the means of retaining the pivot is a nut.

According to another preferred form of the invention, at least one pair of corresponding pointer elements is capable of adjustment to alter the distance of the pointer elements from the pivot. This arrangement may be used for fine adjustment of the proportion of the distances between the pointing elements at the two ends of the device.

According to another preferred form of the invention, one of the pointer elements is a marker capable of forming a legible mark, such as a pencil. This embodiment can be used to directly mark proportioned distances onto the surface on which the image is to be reproduced.

In use, the device is adjusted such that the position of the pivotable joint relative to the pointing elements results in the required proportion between the distances of separation of the two pairs of corresponding pointing elements. The user then moves the first pair of corresponding pointing elements so that their separation distance equals a dimension of interest on the original image. Without significantly disturbing the relative position of the elongated members, the user then uses the second pair of corresponding pointing elements to transfer the proportioned dimension to the surface on which the image is to be reproduced. It will be apparent that this process is facilitated if one of the pointing elements of the second pair of corresponding pointing elements is a marker such as a pencil or pencil lead.

It will be apparent that the device can also be used when a three-dimensional reproduction is to be made from a three-dimensional original, as in sculpting and some forms of model making. In such a case the method of use will be similar to that when a two-dimensional image is to be produced, but the device will be used as a proportioning calliper. With the device adjusted such that the position of the pivotable joint relative to the pointing elements results in the required proportion between the distances of separation of the two pairs of corresponding pointing elements. The user moves the first pair of corresponding pointing elements so that their separation distance equals a dimension of interest on the original image. Without significantly disturbing the relative position of the elongated members, the user then uses the second pair of corresponding pointing elements to check the proportioned dimension on the three-dimensional reproduction.

The elongated members can be of any convenient shape, but straight members are usually preferred. The elongated members can be of any suitable material and cross-sectional shape, preferably they will be sufficiently rigid to maintain the separation distance of the pointing elements to within the acceptable tolerance for the particular purpose for which they are used. The length of the elongated members is such as to be suitable for the size of the original and the reproduced image. It will be apparent that for very large images the device may become too heavy or cumbersome for convenient use In broad form, then, the invention provides a proportioning device is provided having two elongated members of substantially equal length which are adapted so that both ends of both elongated members have pointer elements, wherein the two elongated members are capable of being uncouplably joined together by means of a pivotable joint at various predetermined points along their length, such that the pointing elements on the corresponding ends of the two elongated members are capable of being substantially the same radially measured distance from the pivotable joint, whereby in use separation of the pointing elements at one corresponding end of the elongated members by a first distance will result in the pointing elements at the other ends of the elongated members in being separated by a second distance which is at a substantially constant proportion of the first distance.

According to another form of the invention there is provided an imaging aid for use by a user viewing an object, the imaging aid including:
an image zone means defining the position of an image zone relative to the object, at which image zone the user views an image of the object;
a positioning means capable of defining a viewing position of the user's eyes; and
a spacing means capable of maintaining the relative positions of the image zone means and the viewing means.

The invention therefore provides an imaging aid which the user can position so that with his eyes in the viewing position defined by the positioning means he can view an object through the zone defined by the image zone means. He can then make a series of measurements relating to the object at the image zone and transfer these measurements, after scaling if required, to a receiving surface. The positioning means permits the user to repeatedly place his head in substantially the same position so that the relative position of the user's eyes, the image zone and the object can be reproduced as a series of measurements are transferred to the receiving surface. In this way substantial errors due to parallax can be avoided. A consistent series of measurements can be transferred to the receiving surface and these can assist the user in preparing a substantially accurate representation of the object on the receiving surface.

Typically the user may be an artist or draftsman who wishes to draw the object. The image zone is a defined region within the reach of the user when his eyes are in the viewing position. The image may merely be a hypothetical image formed in a plane between the viewer and the object, on which plane the user focuses his eyes when using the imaging aid. Preferably the image or hypothetical image is at a physical, transparent surface. The positioning means allows interaction with the user's head or part of the user's head so that the user is able to remove his head from the imaging aid and then replace it in substantially the same position, by bringing the same portion(s) of his head into contact with the same portion(s) of the positioning means each time he uses the imaging aid. Preferably the spacing means is adjustable so that the distance between the image zone means and the positioning means can be varied prior to the start of the image transfer process e.g. to suitably frame the object in the image zone means or to provide a comfortable eye focus distance for the user.

It will be apparent that the imaging aid can be employed to assist in the preparation of two-dimensional scaled images of three-dimensional or two dimensional objects. One particular use is to produce images which are very much smaller than the original, such as where the original is a building or natural feature.

According to a preferred form of the invention, the imaging aid has supporting means which may be employed to support it at an appropriate elevation above a generally horizontal solid surface. Conveniently the supporting means is a stand, which is preferably adjustable so as to permit variation of the height of the imaging aid.

According to another preferred form of the invention, the spacing means is extensible such that the distance between the image zone means and the positioning means is capable of being varied.

According to another preferred form of the invention, the positioning means includes one or more rests adapted such that the position of at least one eye of a user relative to the positioning means can be substantially restored when the user returns his head to the positioning means. Preferably the positioning means includes a chin rest and a rest capable of contacting another part of the head of a user, such as the side of his head.

According to another preferred form of the invention, the image zone means includes a substantially planar transparent plate connected by a suitable means to the spacing means such that it is maintained with its plane substantially parallel with the line between the eyes of the user when his eyes are in the viewing position. More preferably the image zone is maintained with its plane substantially parallel with the notional plane of the face of a user when his eyes are in the viewing position. Preferably the transparent plate is held in a frame or other mounting means. Conveniently the transparent plane may have a grid of markings.

According to another, less preferred form of the invention, the image zone means includes a frame which defines at least one or more edges of a viewing space but does not include a transparent plate.

In use the imaging aid is positioned and adjusted such that when the user rests his head on the positioning means he can see the two-dimensional or three-dimensional original object of which he wishes to make an image through the image zone means. The user then closes or covers one eye, measures the distances between various features of the original as seen at the image zone and transfers these measurements in an appropriate manner, after applying a scaling factor if required, to locate a position on a receiving surface on which he wishes to produce the image. It is generally necessary for the user to remove his head from the positioning means when transferring each measurement, but the positioning means enables the user to return his head to substantially its previous position relative to the positioning means prior to taking the next measurement. By this arrangement errors due to parallax effects are minimised. The accuracy of the process is further improved if the user closes or covers the same eye on taking each measurement.

The user makes and transfers a sufficient number of measurements to enable him to complete the image by free hand drawing. It will be apparent that the number of measurements to be made will depend on a number of factors including the complexity of the original object, the skill of the user and the degree of similitude which he requires.

One particularly convenient manner of transferring measurements is to use two reference lines on the image zone means which reference lines are preferably substantially perpendicular to each other. These lines may be edges of the image zone means or marks on the viewing surface. Corresponding lines are drawn onto the receiving surface. For each point on the original which is to be transferred to the receiving surface, perpendicular distances from both of the reference lines are measured on the image zone and transferred to the receiving surface after scaling if required. It will be apparent that if the reference lines are substantially vertical and horizontal, the process just described will be equivalent to transferring the "x and y" co-ordinates from the image zone to the receiving surface.

Measurements on the image zone and on the receiving surface may be made by any convenient means including but not limited to a ruler, dividers or a pencil or brush with the appropriate distance from its end indicated by the placement of the user's finger or thumb. If the scale of the image is to be different from that of the original object, then it will be necessary to determine the measurement to be transferred to the receiving surface by means such as calculation or a geometric construction from the measurement taken from the image zone. Such a process is prone to error.
· Preferably the measurements will be transferred using a proportioning device as described herein.
· The invention also provides a method for transferring dimensions from an original object to a receiving surface whereby:
   the original object is viewed through an imaging aid as described above;
   a series of original measurements relating to the original object are taken on the image zone of the imaging aid by means of a proportioning device constructed such that it generates a corresponding series of derived measurements whereby each original measurement taken using the proportioning device generates a derived measurement which is in substantially constant proportion with the original measurement; and
   using said proportioning device to transfer each derived measurement to the appropriate place on the receiving surface.

In another form, the invention provides a method for transferring dimensions from an original object to a receiving surface according to the method described above wherein it is required to restore the original object to its position after it has been moved during the course of transferring dimensions, whereby:
the original object is placed in a first position between a light source and a solid surface, both of which are maintained in substantially fixed positions, such that a shadow of the subject is cast on the solid surface;
marks are applied on the solid surface to define part or all of the edge of the shadow; such that
after the original object has been moved to a new position, it may be substantially restored to the first position by moving it until the edge of the shadow it casts on the solid surface is substantially co-incident with the marks previously applied to said solid surface.

The invention will now be further explained and illustrated by reference to the accompanying drawings of a non-limiting example in which:
Figure 1 is a side view of a proportioning device according to one form of the invention; and
Figure 2 is a perspective view of the device shown in Figure 1
Figure 3 is a perspective view of part of the device shown in Figure 1 with extended pointer pieces.
Figure 4 is a perspective view of a proportioning device according to a form of the invention having a different pivoting arrangement from that shown in Figure 1.
Figure 5 is an exploded view of the pivot retaining means of the device shown in Figure 4.
Figure 6 is a sectional side view of a proportioning device according to a form of the invention having a different pivoting arrangement from that shown in Figures 1 and 4.
Figure 7 is an end view of the pivot piece shown in Fig 6;
Figure 8 is a perspective view of an imaging aid according to one form of the invention.
Figure 9 is an exploded perspective view of another form of the positioning means

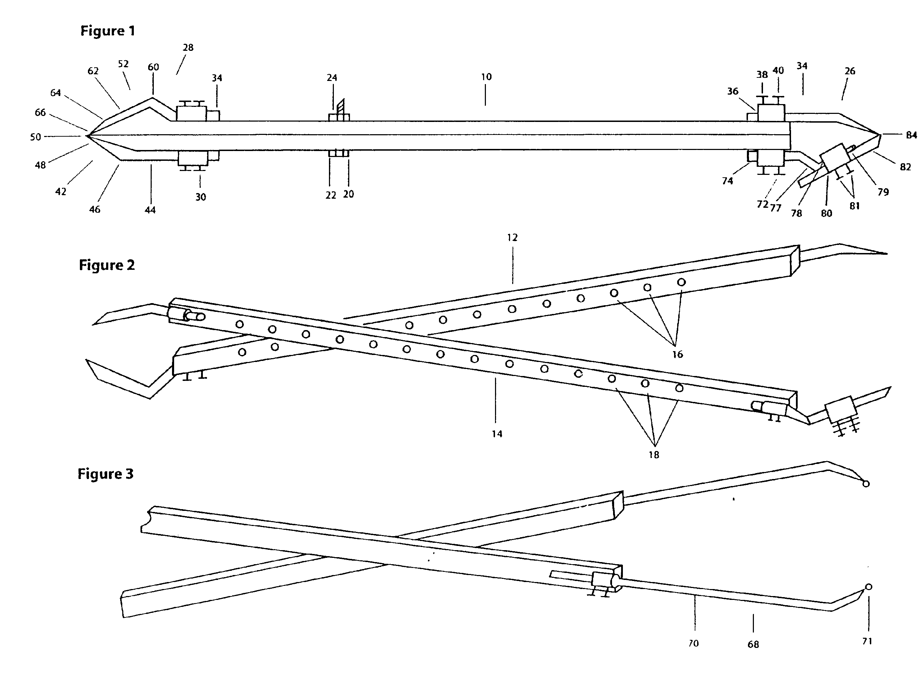

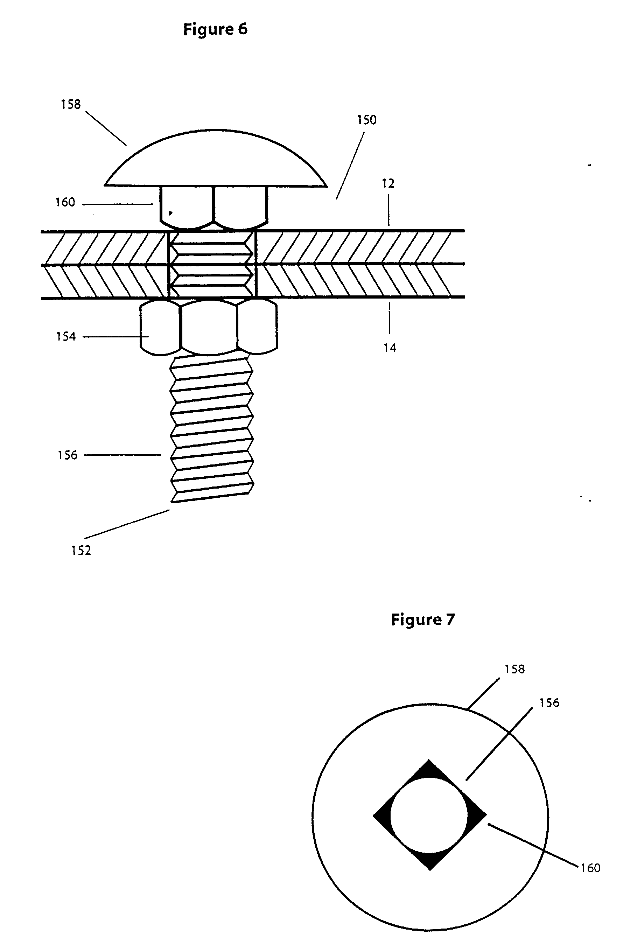

In Figures 1 to 3 one form of a proportioning device 10 is shown which is suitable for use with the imaging aid shown in Figure 6. The proportioning device has a first elongated member 12 and a second elongated member 14 of equal length. A series of holes 16 are provided along the length of the first elongated member and another series of holes 18 are provided along the length of the second elongated member such that at least some of the holes are at substantially equal distances from corresponding ends of the two elongated members. In one form, the holes are approximately equally spaced.

A pivot means 20 is removably insertable through one pair of corresponding holes. Conveniently the pivot means may be a bolt 22 and a nut 24.

Pointing assemblies 26, 28, 30, 32 are provided at or near to both of the ends of both of the elongated members. Conveniently, one of these pointing assemblies may have a marking element such as a pencil, a pen, or a length of pencil lead.

Each of the pointing assemblies has a pointer piece 34, a housing 36 and one or more retainers 38. The housing has a first hole (not shown) which is of suitable size to receive the pointer pieces and which is aligned substantially parallel to the long axis of the associated elongated member. The housing also has a second hole (not shown) provided with a screw thread and positioned to intersect the first hole, preferably the axis of the second hole is substantially perpendicular to that of the first hole. A first set screw 38 is provided which may be screwed into the second hole to retain the pointer piece. Preferably a third hole (not shown) is provided which is similar to the second hole and capable of receiving a second set screw 40. The set screw(s) can be partly unscrewed, the pointer piece can be inserted in the housing with the required protrusion and orientation and then the set screws can be tightened to hold the pointer piece in position.

Various forms of pointer piece may be employed to suit the application and the preference of the user.

A simple pointer piece 46 has an attachment rod section 44 which is insertable in the housing 36, a bend 46 and a tapered section 48 terminating in a pointing element 50 which may be in the form of a sharp point as shown in the drawing or alternatively may be in the form of a ball or other swelling. It has been found that in some circumstances it is easier for a user to discern the location of a ball-like termination against the image zone than when a sharp point is employed

A cranked pointer piece 52 has an attachment rod section 44 which is insertable in the housing 36, a first bend 56 which is outwardly directed, an outwardly extending section 58, a second bend which is substantially in the same plane as the first bend but which is inwardly directed, and an inwardly extending section 62 which has a tapered section 64 terminating in a pointing element 66. This arrangement permits the tapered section of the pointer piece to be at a increased angle to the plane of movement of the elongated elements. This type of pointer piece is also particularly useful when producing a three-dimensional image from a three-dimensional original.

Figure 3 shows an elongated pointer piece 68 which is generally similar to the simple pointer piece except that the attachment rod section 70 is longer than the corresponding part 44 of the simple pointer piece. In the form shown in Figure 3, the pointing element is in the form of a ball or swelling 71. If required, an elongated form of the cranked pointer piece 52 or of a marker assembly 72 can also be employed.

The marker assembly 72 has an attachment rod section 74, a first bend 76 which is outwardly directed, an outwardly extending section 77, a second bend 78 which is substantially in the same plane as the first bend but which is inwardly directed, and an inwardly extending section 79 on which is mounted a housing 80 with one or more set screws similar to item 36 which has already been described. A section of pencil lead 82 can be inserted in the housing. One end of the pencil lead 84 can function as both a marker and as a pointing element.

Different types of pointer piece can be combined to suit the requirements of the user, except that if an elongated pointer piece is used at one end of an elongated member it is normally desirable to use another elongated pointer piece on the corresponding end of the other elongated member.

It will be obvious to one skilled in the art that if the holes in the elongated members 16, 18 are not arranged so that their axes are parallel, then there should preferably be means by which the pointer elements may be rotated, this may be conveniently achieved in the method of attachment/adjustment shown in the figures and previously described herein.

In use the pair of holes through which the pivot means is inserted is selected to give approximately the required proportional separation of the pointing elements at the two ends of the divider. If the exact proportional separation is not achieved by the positioning of the pivot, fine adjustment may be made by axially moving one or more corresponding pairs of pointer pieces relative to their respective housings. The pointers at corresponding ends of the elongated members are usually adjusted so that the points are in close proximity when the long axes of the elongated members are parallel, as is shown in Figure 1.

If the pivot means is a nut and bolt, they are left in a slightly slackened position and the relative position of the elongated members is adjusted so that one corresponding pair of points is separated by the required distance. The nut and bolt are then tightened sufficiently to inhibit relative movement of the elongated members.

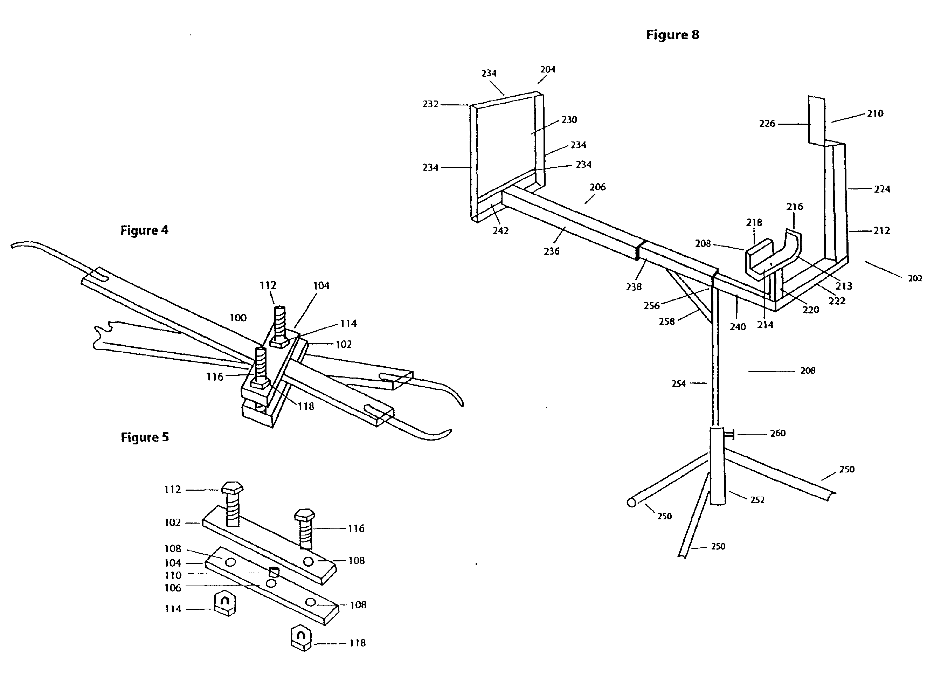

If the pivot means is not a nut and bolt it is desirable for there to be some other means of inhibiting the relative movement of the two elongated members during the transfer of a dimension from the original image to the surface on which the image is to be reproduced. One such arrangement is shown in Figures 4 and 5 wherein there is a pivot assembly 100. The pivot assembly has a first retaining member 102 and a second retaining member 104. The first and second retaining members are of an elongated form and are substantially identical. Each retaining member has a circular blind hole 106 formed on one side at a point about half way along its length and circular through holes 108 near to the ends of the retaining members wherein the axes of the through holes are parallel to that of the blind hole. The blind holes are of the same diameter as the holes disposed along the lengths of the first and second elongated members 16 and 18. The pivot means consists of a rod 110 of slightly smaller diameter than the blind holes and of a length such that it is capable of being retained when it is passed through corresponding holes in the first and second elongated member and the first and second retaining members are positioned such that each end of the rod 110 protrudes into one of the blind holes but the retaining members are capable of simultaneously being in contact with the elongated members. The retaining members are aligned so that each is generally parallel to the direction defined by the separation of the pointing elements at a corresponding end of the elongated members. A first bolt 112 passes through the through holes 108 in one pair of corresponding ends of the retaining members and a first nut 114 is screwed onto the first bolt. A second bolt 114 passes through the through holes 108 in the other pair of corresponding ends of the retaining members and a second nut 118 is screwed onto the second bolt. The through holes 108 are positioned at a sufficient distance from the blind holes that the bolts 112, 114 do not unduly inhibit the range of movement of the first and second elongated members relative to each other.

In use the first and second nuts are screwed in or out to induce the required degree of resistance to movement of the first and second elongated members relative to each other.

A further pivoting arrangement is shown in Figures 6 and 7. In this form of the invention, the pivot means 150 comprises a coach bolt 152 and a retaining nut 156 wherein the coach bolt 152 has a threaded section 156, a head section 158 which is of larger maximum cross-sectional area than the threaded section 156, and a shoulder section 160 which has a cross-sectional area intermediate between that of the threaded section 156 and the maximum of the head section 158. In use it is found that, because the shoulder section 160 has a smaller cross-sectional area than that of the head of the bolt 22 (which is a conventional engine bolt) shown in Figure 1, it imparts a lesser degree of friction to the elongated member 12' with which it is in contact. This reduced degree of friction is found to facilitate adjustment of the proportioning device.

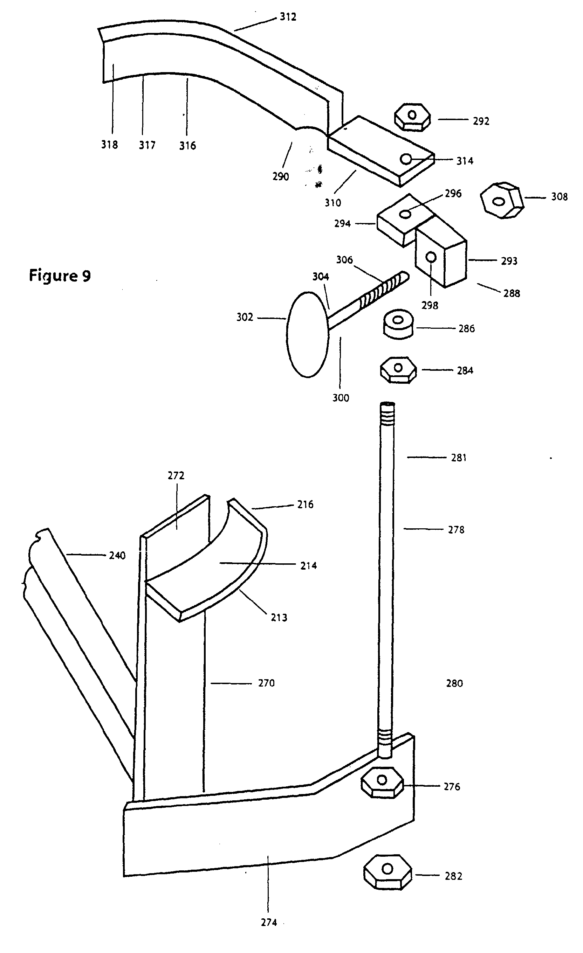

One embodiment of the imaging aid is shown in Figure 8. The imaging aid comprises a positioning means 202, image zone means 204, a spacing means 206 capable of maintaining the relative position of the image zone means and the positioning means and a stand 208.

The positioning means is capable of being used to assist the user in repeatedly positioning his head generally, and the eye used for viewing in particular, in substantially the same position with respect to the image zone means. The direction from the positioning means generally, and the eye of a user particularly towards the image zone means is indicated on Figure 6 by arrow X.

The positioning means has a chin rest 208, a head rest 210 and a connecting means 212. The chin rest has an elongated rest piece 213 having an upwardly facing flat surface 214 running perpendicularly to direction X on which flat surface the underside of the chin of the user may be rested. One end of the elongated rest piece is extended vertically upwards to form a resting piece 216 against which a user may position the side of his jaw. At least a portion of the long edge of the elongated rest piece on the side nearest to the image zone means is extended vertically upwards to form a front rest 218 against which a user may rest the point of his chin.

The connecting means 212 has a first vertical post 220 connected to the underside of the elongated rest piece. the first vertical post is connected to the first end of a horizontal connecting member 222 which runs perpendicular to direction X. A second vertical post 224 is connected to the second end of the connecting member in an upwardly pointing direction. The head rest 210 is connected to the top portion of the second vertical post on the side of the second vertical post facing the chin rest. The side of the head rest most distant from the second vertical post has a flat vertical surface 226 which is parallel to direction X. The lengths of the first and second vertical posts and the connecting member are such that when the chin of the user is positioned on the chin rest, the user can conveniently place his head so that the flat vertical surface of the head rest comes in contact with the side of the users head, preferably at a point just above the ear.

The construction of the connecting means is such that it maintains the relative position of the head rest with respect to the chin rest in normal use. Conveniently the length of one or more of the first and second vertical posts and the connecting member are adjustable to accommodate the specific head size of the'user. The adjustment means (not shown) may be by means of telescoping components with locking devices or other convenient methods.

The image zone means 204 comprises a flat, rectangular sheet 230 of transparent material, such as glass or Perspex, mounted in an image zone frame 232. The image zone frame consists of four edge pieces of 'C' or 'F' section material 234, conveniently wood, metal or polymer, wherein one edge piece is positioned on each side of the rectangular sheet such that the edges of the sheet lie within the opening of the 'C' or 'F' section and the ends of each edge piece are joined to the adjacent ends of the adjacent edge pieces.

The image zone means 204 and the positioning means 202 are attached to the opposite ends of the spacing means 206 such that the planes defined by the flat rectangular sheet 230 and the connecting means 212 are parallel to each other and perpendicular to the spacing means.

The spacing means includes three nesting members of square section tube 236, 238, 240 whereby the length of the spacing means, and hence the separation of the positioning means from the image zone means may be adjusted by telescopically extending or retracting the nesting members. The spacing means may be maintained at the required length by tightening locking screws (not shown). Optionally distance markings can be provided along the lengths of the inner nesting members 238, 240 to facilitate restoring the length of the spacing means to some previous value. The positioning means is attached to one end of the spacing means either demountably or undemountably. At the other end of the spacing means there is rigidly attached a horizontal fixing member 242 wherein the fixing member is perpendicular to the nesting members. The fixing member may conveniently be of a 'C' section. The image zone frame 232 is demountably attached to the fixing member by'bolts, clips or other convenient means (not shown) such that it may be positioned with either the long sides or the short sides vertical. Alternatively, the image zone frame may be permanently attached to the fixing member, in which case the orientation of the image zone may be changed by completely withdrawing the nesting member to which the fixing member is attached, rotating this nesting member through 90° about its axis and re-nesting it with the other nesting members.

The spacing means is supported by a stand 208 which may take any convenient form. In the embodiment shown in Figure 8 the stand includes three legs 250 connected to a vertical hollow tube 252 so as to form a tripod. A support member 254 is slidably inserted in the vertical hollow tube. The support member is attached to the spacing means at a point 256 selected such that any net turning moment due to the weights of the image zone means, the positioning means and the spacing means is not sufficient to topple the imaging aid. A cross brace is attached to the support member and the nesting member to which the support member is attached in order to increase the rigidity of the connection between the support member and the spacing means.

In use, the position of the support member relative to the vertical hollow tube is adjusted so that the components of the imaging device are at the desired elevation and a set screw 260 is then tightened to maintain the relative position of the support member and the vertical hollow member.

Figure 9 shows a variant of the arrangement of the positioning means wherein a forehead rest is provided to give even greater uniformity when repositioning the head of the user in the positioning means. The elongated rest piece 213 is attached to the first vertical post which is formed from a flat bar 270 which extends vertically above the upwardly facing flat surface 214 such that the extension forms the front rest 272. The horizontal connecting member is also formed from a flat bar 274 which may be curved or bent if required to suit the positioning of other components. A locating nut 276 is attached to the distal end of the horizontal connecting member with the axis of its hole vertical so as to receive a threaded first end 280 of a second vertical post 278 which is in the form of a metal bar of circular section. A locking nut 282 may be applied to the first end of the second vertical post which protrudes through the locating nut in order to inhibit unwanted rotation of the second vertical post relative to the locating nut. A support nut 284 is applied to the threaded second end 281 of the second vertical post. Above the support nut are positioned a washer 286, a side rest holder 288, a forehead rest member 290 and a retaining nut 292.

The side rest holder consists of two square apertured block elements 293, 294 each pierced by a hole with its axis central to and perpendicular to the square sides. One of these hole is a plain hole 296, the other hole is a threaded hole 298. The apertured block elements are conjoined at non-pierced sides such that the axes of the holes 296, 298 are perpendicular to each other but do not intersect, as shown in the figure. The second vertical post passes through the plain hole 296. The threaded hole 298 is capable of receiving a side rest 300 which is mushroom shaped having a circular flat or domed head 302 and a stem 304 which is threaded along at least part of its length 306. The threaded portion of the stem is screwed into the threaded hole 298 and a securing nut 308 may be applied to the protruding portion of the stem to inhibit unwanted rotation of the side rest.

The forehead rest member 290 comprises a short bar 310 connected to a long bar 312. One end of the short bar is joined to an end of the long bar such that the long axes of the bars are substantially parallel and the planes of the long bar and the short bar are perpendicular. The short bar is pierced by a hole 314 which passes over the second vertical post as already described, such that the forehead rest member is directed generally towards the image zone. The long bar has a bend 316 such that its end distal 317 from the short bar is directed generally towards the first vertical post and that surface of the distal end of the long bar which faces generally towards the first vertical post forms a forehead rest surface 318.

In use the user places his chin on the elongated rest piece 213 so that his chin contacted the resting piece 216 and the front rest 272. He then adjusts the side rest 300 so that its head 302 is positioned against the side of the user's head, and the forehead rest member so that the forehead rest surface was positioned against the user's forehead. The locking nut 282, the retaining nut 292 and the securing nut are then tightened to inhibit unwanted relative movement of the components of the positioning means. It will be apparent that the additional locating surface for the forehead of the user will result in even greater uniformity when repositioning his head.

One difficulty often experienced when painting portraits is correct repositioning of the subject after a rest period or unintentional movements by the subject. This problem may be substantially overcome by positioning the subject between a light source and a solid surface, both of which are maintained in substantially fixed positions, such that a shadow of the subject is cast on the solid surface. When the subject has assumed the required pose, the artist can apply marks on the solid surface to define part or all of the edge of the shadow. Thereafter, whenever the subject has moved, the artist can request re-adjustment of the subject's position until the subject's shadow is aligned with the marks on the solid surface. If required the light can be extinguished except when applying the marks to the solid surface and when re-adjusting the subject's position. It will be apparent that this method can also be used in other situations wherein the original object is moved during the course of transferring dimensions.

It will be apparent that this invention or part of this invention is capable of other uses.

For example an artist seeking to improve his skill can draw an image using visual judgement of proportions only and then use the invention to check the proportions of the image against those of the original.

Also the proportioning device can be made in different sizes to suit different purposes. For example, a very large proportioning device adjusted to give a large increase in size could be used to transfer dimensions from a comparatively small image to a wall in preparation for producing a mural.

The word 'comprising' and forms of the word 'comprising' as used in this description does not limit the invention claimed to exclude any variants or additions.

The term 'image zone' and related terms as used in this description refer to the portion of the imaging aid at which measurements of the original object are taken and does not imply that an image is actually produced there.

Modifications and improvements to the invention will be readily apparent to those skilled in the art. Such modifications and improvements are intended to be within the scope of this invention.

## Claims

1. A proportioning device having:
two elongated members of substantially equal length which are adapted so that both ends of both elongated members have pointing elements, and the separation of the pointing element at one end of . each of the elongated members from the pointing element at the other end of the same elongated member is capable of being adjusted; wherein
the two elongated members are capable of being uncouplably joined together by means of a pivotable joint at various predetermined points along their lengths such that the pointing elements on the corresponding ends of the two elongated members are capable of being substantially the same radially measured distance from the pivotable joint;
whereby in use, separation of the pointing elements at one corresponding end of the elongated members by a first distances will result in the pointing elements at the other ends of the elongated members in being separated by a second distance which is at a substantially constant proportion of the first distance, and the said constant proportion is capable of being adjusted.

2. A proportioning device as claimed in claim 1 wherein both of the elongated members have a series of corresponding holes along their lengths whereby the pivotable joint may be formed by inserting a pivot means through one pair of the corresponding holes.

3. A proportioning device as claimed in claim 2 wherein there is a means of retaining the pivot means in the pivotable joint.

4. A proportioning device as claimed in any one of the preceding claims wherein the pivot means is a nut and bolt.

5. A proportioning device as claimed in claim 4 wherein the bolt has a head and a threaded section and a region between the head and the threaded section which has a cross-sectional area intermediate between that of the head and of the threaded section.

6. A proportioning device as claimed in claim 3 wherein the pivot means is retained by a retaining member positioned on each side of the pivotable joint such that the planes of the retaining members are substantially perpendicular to the axis of the pivot means and the retaining members are uncouplably fastened to each other.

7. A proportioning device as claimed in any one of the preceding claims wherein at least one of the pointing elements is adapted to form a legible mark.

8. An imaging aid including:
an image zone means defining the position of an image zone relative to the object, at which image zone the user views an image of the object;
a positioning means capable of defining a viewing position of the user's eyes; and
a spacing means capable of maintaining the relative positions of the image zone means and the viewing means
wherein proportioned dimensions may be transferred from the image zone to another surface by means of a proportioning device as claimed in any one of the preceding claims.

9. An imaging aid as claimed in claim 8 wherein the image zone has at least two non-parallel reference lines which are capable of being used as reference lines when dimensions are transferred from the image zone.

10. An imaging aid as claimed in claim 8 wherein the image zone means has a substantially planar transparent plate.

11. An imaging aid as claimed in claim 8 wherein the spacing means is adapted such that the relative positions of the image zone means and the viewing means may be varied.

12. An imaging aid as claimed in claim 8 which further comprises a support stand.

13. An imaging aid'as claimed in claim 12 wherein the support stand is adjustable.

14. An imaging aid as claimed in claim 8 wherein the positioning means has one or more rests adapted such that the position of at least one eye of a user relative to the positioning means can be substantially restored when the user returns his head to the positioning means.

15. An imaging aid as claimed in claim 14 wherein the positioning means includes a chin rest and a rest capable of contacting another part of the head of a user, such as the side of his head.

16. A method for transferring dimensions from an original object to a receiving surface whereby:
the original object is viewed through an imaging aid as claimed in any one of claims 8-15;
a series of original measurements relating to the original object are taken on the image zone of the imaging aid by means of a proportioning device as claimed in any one of claims 1-7 which is constructed such that it generates a corresponding series of derived measurements; and
using said proportioning device to transfer each derived measurement to the appropriate place on the receiving surface.

17. A method for transferring dimensions from an original object to a receiving surface according to claim 16 wherein it is required to restore the original object to its position after it has been moved during the course of transferring dimensions whereby:
the original object is placed in a first position between a light source and a solid surface, both of which are maintained in substantially fixed positions, such that a shadow of the subject is cast on the solid surface;
marks are applied on the solid surface to define at least part of the edge of the shadow; such that
after the original object has been moved to a new position, it may be substantially restored to the first position by moving it until the edge of the shadow it casts on the solid surface is substantially co-incident with the marks previously applied to said solid surface.
